# DEMANDE DE BREVET EUROPEEN

(11) **EP 2 671 786 A1**
(43) Date de publication de la demande: **11.12.2013**
(21) Numéro de dépôt: 13171286.1
(22) Date de dépôt: 10.06.2013
(51) Int. Cl.: B62D 61/08, B62D 49/06, B60B 35/06

(54) **Véhicule de transport automoteur à 3 roues**

(30) Priorité: 08.06.2012 FR 1255379
(71) Demandeur: Tomasini, Daniel, 10200 Proverville (FR)
(72) Inventeur: Tomasini, Daniel, 10200 PROVERVILLE (FR); Tomasini, Arnaud, 10200 PROVERVILLE (FR); Feliot, Georges, 78330 FONTENAY LE FLEURY (FR)
(74) Mandataire: Oudin, Stéphane

(57) **Abrégé**

La présente invention concerne un véhicule de transport automoteur (1) à au moins trois roues de type enjambeur destiné à travailler dans des cultures en lignes, notamment de la vigne, **caractérisé** en ce qu'il comprend un module (2) comportant un châssis (3) muni d'une première roue (4) motrice et directrice, un jambage droit (5) muni d'une deuxième roue (7), un jambage gauche (6) muni d'une troisième roue (8), et d'au moins un organe de réglage (9) de largeur de voie du type à parallélogramme déformable assurant la solidarisation d'un des jambages droit ou gauche (5,6) et permettant de régler l'écartement dudit jambage droit ou gauche (5,6) par rapport à l'axe longitudinal dudit module (2).

## Description

### Domaine technique

La présente invention concerne un véhicule automoteur à au moins trois roues de type transporteur enjambeur destiné à travailler dans des cultures en lignes, notamment de la vigne, en chevauchant une ou plusieurs rangées de plants.

### Technique antérieure

On connaît déjà différents types de véhicules de ce genre, tous se caractérisent notamment par leur faible maniabilité, leur faible stabilité ou encore leur faible capacité de chargement consécutives à leur encombrement, leur poids ou leur structure.

En particulier, on connaît un véhicule du type brouette motorisée de faible largeur munie d'un châssis avec une zone de chargement, d'organes de roulement mis en mouvement par un moteur et de deux bras munis de poignées et d'organes de commandes permettant de diriger et de faire avancer ledit véhicule. De manière classique, les organes de roulement sont des chenilles actionnées par un moteur thermique. Ce type de véhicule de transport, qui est pratique car il permet de circuler entre deux rangs de vigne, présente toutefois un certain nombre d'inconvénients. Ainsi, il a une faible capacité de chargement et génère surtout un niveau sonore et vibratoire élevé qui peut avoir des conséquences néfastes sur la santé de l'utilisateur. En effet, de nombreuses études ont montré que les personnes exposées de manière fréquente et prolongée aux vibrations peuvent développer des troubles vertébraux, articulaires, digestifs ou encore visuels. De plus, l'inconfort et les pertes d'attention générées par les vibrations peuvent également gêner l'exécution du travail et ainsi entrainer des accidents graves.

Pour remédier à certains de ces inconvénients, on connaît un véhicule du type brouette motorisée de faible largeur munie d'un châssis avec une zone de chargement, d'organes de roulement du type roues avec pneumatique mis en mouvement par un moteur électrique, et de deux bras munis de poignées et d'organes de commandes permettant de diriger et de faire avancer ledit véhicule. Toutefois, du fait de leur faible largeur pour passer entre deux rangs adjacents de culture, ce type de véhicule a une faible capacité de chargement et manque singulièrement de stabilité notamment sur des sols accidentés. De plus, l'utilisateur qui dirige ledit véhicule avec lesdits bras, risque de se blesser les mains en les frottant sur les rangs de cultures notamment dans des vignes à rangs serrés.

Pour augmenter la stabilité, on connaît déjà des tracteurs enjambeurs munis d'une plateforme de chargement et pouvant enjamber un ou plusieurs rangs de culture. Ces enjambeurs sont de plus grandes dimensions et sont classiquement mis en mouvement et actionné par un moteur thermique couplé à un moteur hydraulique. Outre les problèmes liés aux rejets de dioxyde de carbone dans l'atmosphère et aux nuisances sonores, les moteurs hydrauliques présentent le risque de fuites d'huiles chaudes relativement fréquentes et pouvant endommager les plantations, polluer le sol et causer des blessures pour l'utilisateur. Enfin, du fait de leur largeur importante, ces véhicules nécessitent des remorques avec un gabarit routier spécifique pour leur transport jusqu'au site de culture.

### Exposé de l'invention

Le but de la présente invention est donc de pallier les inconvénients précédemment cités et de proposer un véhicule automoteur de type transporteur enjambeur garantissant de grandes stabilité et capacité de chargement et une exceptionnelle maniabilité, ledit véhicule permettant également de s'adapter à différents types de plantations en ligne et ne nécessitant pas de moyen de transport hors gabarit pour leur transfert jusqu'au site de travail.

Conformément à l'invention, il est donc proposé un véhicule de transport automoteur à au moins trois roues de type enjambeur destiné à travailler dans des cultures en lignes, notamment de la vigne, comprenant un module comportant un châssis muni d'une première roue motrice et directrice et d'au moins un portique arrière composé de deux poutres sensiblement verticales, un jambage droit muni à son extrémité basse d'une deuxième roue, un jambage gauche muni à son extrémité basse d'une troisième roue, et d'au moins un organe de réglage de largeur de voie assurant la solidarisation d'un des jambages droit ou gauche et permettant de régler l'écartement dudit jambage droit ou gauche par rapport à l'axe longitudinal dudit module, ledit organe de réglage comportant deux bras globalement parallèles entre eux, sensiblement horizontaux et articulés autour d'un axe sensiblement vertical à chacune de ses extrémités libres respectivement à l'extrémité libre du jambage droit ou gauche associé et à l'extrémité libre de la poutre associée du châssis, lesdites extrémités libres respectives du jambage droit ou gauche et de la poutre associés et lesdits bras formant les quatre côtés d'un parallélogramme déformable. Ledit véhicule de transport automoteur est remarquable en ce qu'au moins deux côtés opposés dudit parallélogramme sont en forme globale de L, afin de pouvoir replier ledit jambage droit ou gauche le long du véhicule de transport automoteur au plus près du châssis et de réduire ainsi au maximum la largeur dudit véhicule de transport automoteur en position repliée.

De préférence, le véhicule de transport automoteur comporte un organe de réglage de largeur de voie associé à chacun des jambages droit et gauche.

Selon un mode de réalisation préféré, les bras sont en forme globale de L et comportent une grande aile et une petite aile, lesdites grande et petite ailes étant perpendiculaires entre elles et les grandes ailes des bras de chaque organe de réglage étant parallèles entre elles ; chaque organe de réglage est tel que ces deux bras soient orientés de manière à ce que, d'une part, la petite aile de l'un desdits bras soit articulée sur le jambage droit ou gauche associé et, d'autre part, la petite aile de l'autre bras soit articulée sur le châssis.

Selon un mode de réalisation plus avantageux, lesdites extrémités libres respectives des jambage droit et/ou gauche et poutre sont en forme globale de L.

Au moins l'un des bras de chaque organe de réglage est muni avantageusement d'un organe de réglage de longueur.

La première roue est montée pivotante autour d'un axe sensiblement vertical et est motorisée grâce à des moteurs électriques.

Le véhicule de transport automoteur comporte de préférence un arceau joignant les extrémités libres desdites deux poutres et étant articulé selon un axe sensiblement horizontal permettant d'éviter la déformation du châssis en général et du portique arrière en particulier et d'assurer la sécurité en cas de retournement dudit véhicule de transport automoteur.

De manière avantageuse, le véhicule de transport automoteur comporte un organe de levage rapide articulé au châssis autour d'un axe sensiblement horizontal et comprenant un manche et au moins un bras d'appui agencé pour prendre appui sur le sol et soulever l'arrière du véhicule de transport automoteur lorsque que l'on fait pivoter le manche autour de l'axe de rotation dudit organe de levage rapide.

Selon un mode de réalisation préféré, le châssis reçoit un poste de pilotage muni d'une assise et d'un poste de commande.

Selon un mode de réalisation préféré, le châssis supporte des modules tels que, par exemple, une benne basculante, un plateau à hauteur variable ou encore une nacelle de cueillette.

Le véhicule de transport automoteur comporte avantageusement au moins un actionneur permettant la mise en mouvement du module.

De manière avantageuse, le véhicule de transport automoteur comporte une console déportée regroupant l'ensemble des commandes et permettant un pilotage à distance

### Description sommaire des figures

D'autres avantages et caractéristiques ressortiront mieux de la description qui va suivre d'un mode d'exécution d'un véhicule de transport automoteur selon l'invention en référence aux figures annexées sur lesquelles :
- la figure 1 est une vue de face d'un véhicule de transport automoteur selon l'invention avec un poste de pilotage et en configuration jambage gauche écarté ;
- la figure 2 est une vue du coté gauche du véhicule de transport automoteur de la figure précédente sans poste de pilotage ni arceau ;
- la figure 3 est une vue de dessus du véhicule de transport automoteur de la figure 1 sans poste de pilotage ni arceau ;
- la figure 4 est une vue en perspective arrière partielle du véhicule de transport automoteur de la figure 1 sans poste de pilotage ni arceau ;

- la figure 5 est une vue de droite du véhicule de transport automoteur de la figure 1 sans poste de pilotage ni arceau et muni d'une benne basculante ;
- la figure 6 est une vue en perspective arrière partielle d'une variante de réalisation du véhicule de transport automoteur sans poste de pilotage ni arceau.

### Meilleure manière de réaliser l'invention technique

On décrira ci-après le véhicule de transport automoteur lors d'une utilisation sur un sol horizontal. Il va de soi que le sol sur lequel se déplace ledit véhicule automoteur pourra également être plus ou moins incliné, les termes vertical et/ou horizontal seront alors à adapter à l'inclinaison dudit sol.

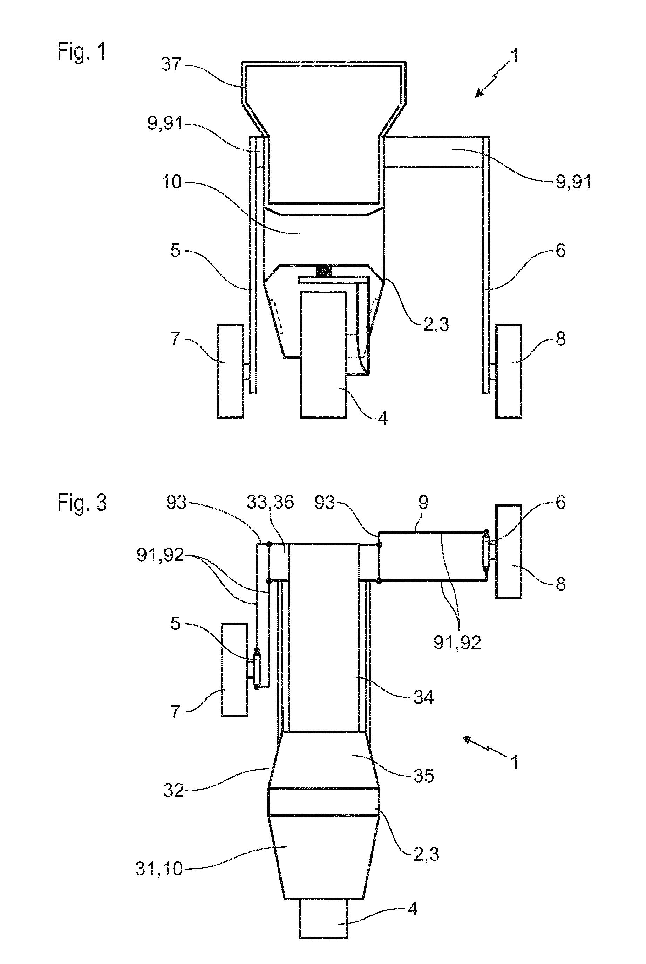

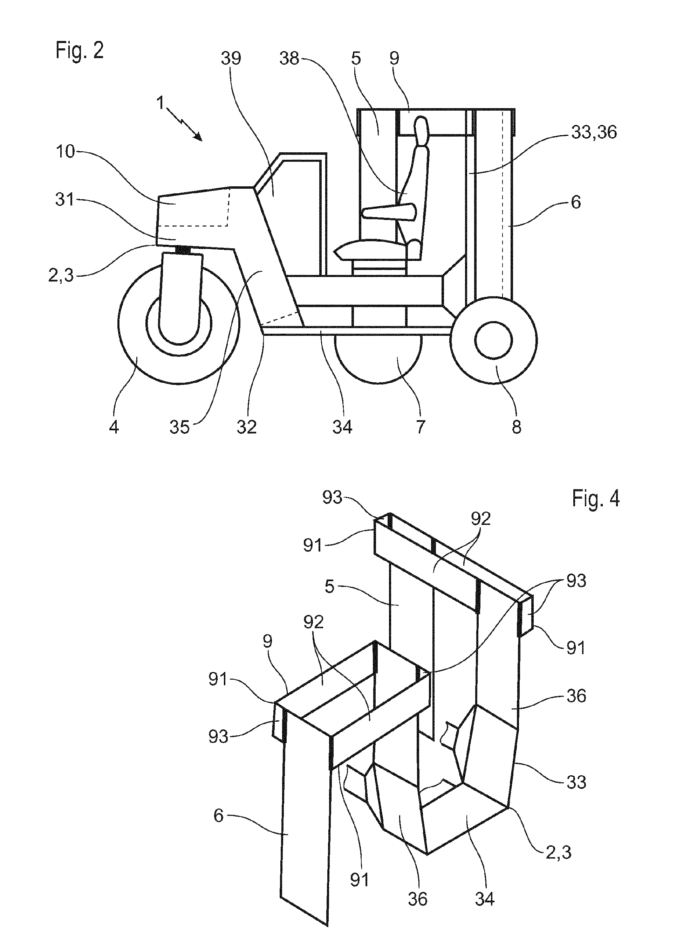

Ainsi, en référence aux figures 1 à 5, le véhicule de transport automoteur 1 comporte au moins trois roues et est du type enjambeur destiné à travailler dans des cultures en lignes, notamment de la vigne. Ledit véhicule de transport automoteur 1 comprend un module 2 comportant un châssis 3 muni d'une première roue 4 motrice et directrice. Le véhicule de transport automoteur 1 comporte en outre un jambage droit 5 et un jambage gauche 6, chacun des jambages droit et gauche 5,6 étant muni respectivement d'une deuxième roue 7 et d'une troisième roue 8. Chacun des jambages droit et gauche 5,6 est solidarisé au module 2 par un organe de réglage 9 de largeur de voie du type à parallélogramme déformable permettant de régler indépendamment l'écartement de chacun des jambages droit et gauche 5,6 par rapport audit module 2. Ainsi, on pourra adapter, selon les besoins et les dimensions de l'espace entre les rangs de la culture en ligne, l'écartement entre les différentes première, deuxième et troisième roues 4,6,7. Avec de tels organe de réglage de largeur de voie 8, on comprend bien qu'on peut aisément passer d'une configuration à l'autre. Ainsi, on peut avoir la première roue 4 dans un entre-rangs et chacune des deuxième et troisième roues 7,8 dans un entre-rangs adjacent différent, ou les première et deuxième roues 4,7 dans un même entre-rangs et la troisième roue 8 dans un entre-rangs adjacent, ou encore les première, deuxième et troisième roues 4,7,8 dans le même entre-rangs.

Cette dernière configuration, qui nécessite d'avoir les deuxième et troisième roues 7,8 repliées au maximum contre le module 2, est particulièrement intéressante car elle permet un transport aisé du véhicule de transport automoteur 1 sur une remorque de gabarit routier standard, c'est-à-dire dont la largeur n'excède pas 2,55 mètres.

On comprend bien que le véhicule de transport automoteur 1 pourra comporter l'un des jambages droit ou gauche 5,6 fixe et l'autre mobile grâce à un organe de réglage 9 de largeur de voie, sans sortir du cadre de la présente invention.

Le châssis 3 comprenant une plateforme avant 31, une zone médiane 32 en forme globale de L ouvert et un portique arrière 33 recevant l'organe de réglage de largeur de voie 9 de chacun des jambages droit et gauche 5,6.

Le véhicule de transport automoteur 1 est tel que la première roue 4 est montée pivotante autour d'un axe sensiblement vertical respectivement sous la plateforme avant 31 dudit châssis 3. Pour des raisons écologiques et de réductions des rejets et des nuisances sonores, la première roue 4 est de préférence motorisée grâce à des moteurs électriques. Lesdits moteurs seront alimentés par des batteries (non représentées) disposées par exemple sur ladite plateforme avant 31 du châssis 3 sous un capot 10.

La zone médiane 32 comprend un plancher 34 en forme générale de parallélépipède allongé aplati sensiblement horizontal disposé près du sol et de préférence sensiblement au niveau de l'axe de rotation horizontal de la première roue 4, et une portion inclinée 35 joignant le bord arrière de la plate-forme avant 31 au bord avant du plancher 34.

Le portique arrière 33 du châssis 3 comprend deux poutres 36 disposées au voisinage de l'extrémité libre du plancher 34 et issues chacune sensiblement verticalement d'un des bords longitudinaux dudit plancher 34. Pour des raisons évidentes de tenue mécanique, le portique arrière 33 comporte en outre un arceau 37 joignant les extrémités libres desdites deux poutres 36, ledit arceau 37 étant avantageusement articulé selon un axe sensiblement horizontal. Ledit arceau 37 articulé permet, outre d'éviter la déformation du châssis 3 en général et du portique arrière 33 en particulier, de réduire la hauteur du véhicule de transport automoteur 1 notamment lors de son transfert jusqu'au site de culture et d'assurer la sécurité en cas de retournement dudit véhicule de transport automoteur 1. De plus, la forme évasée dudit arceau 37 est déterminée pour permettre, le cas échéant, le basculement d'une benne à sarments ou similaire qui peut être mise en place sur la zone médiane 32 du châssis 3.

Chacun des jambages droit et gauche 5,6 est solidarisé au module 2, respectivement à l'une des poutres 36 du portique arrière 33 du châssis 3, par un organe de réglage 9 de largeur de voie. Chaque organe de réglage 9 comporte deux bras 91 globalement parallèles entre eux et sensiblement horizontaux, chaque bras 91 étant articulé autour d'un axe sensiblement vertical à chacune de ses extrémités libres respectivement à l'extrémité libre d'un jambage droit ou gauche 5,6 et à l'extrémité libre de la poutre 36 associée du châssis 3, les extrémités libres respectives du jambage droit ou gauche 5,6 et de la poutre 36 associés et les bras 91 formant les quatre côtés d'un parallélogramme déformable. Les organes de réglage 9 de largeur de voie du type à parallélogramme déformable, ainsi constitués, permettent d'avoir, quel que soit le réglage de voie, les deuxième et troisième roues 7,8 toujours orientées parallèlement au plan longitudinal vertical du véhicule de transport automoteur 1.

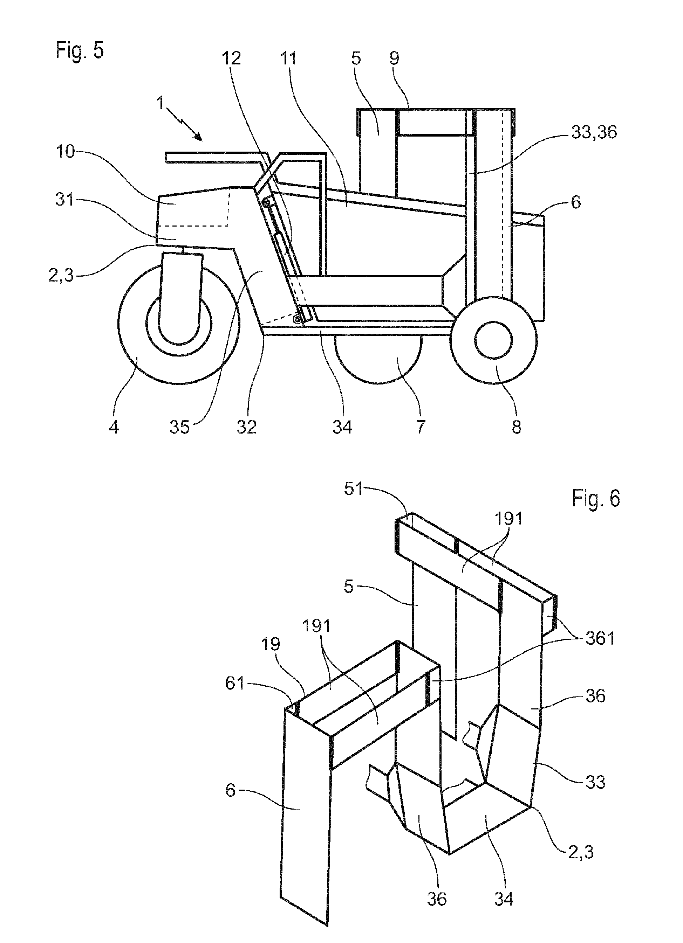

Chaque bras 91 est avantageusement en forme globale de L et comporte une grande aile 92 et une petite aile 93, lesdites grande et petite ailes 92,93 étant perpendiculaires entre elles et les grandes ailes 92 des bras 91 de chaque organe de réglage 9 étant parallèles entre elles. En outre, chaque organe de réglage 9 est tel que ces bras 91 en forme de L soient orientés de manière à ce que, d'une part, la petite aile 93 de l'un desdits bras 91 soit articulée sur le jambage droit ou gauche 5,6 associé et, d'autre part, la petite aile 93 de l'autre bras 91 soit articulée sur la poutre 36 associée du portique arrière 33 du châssis 3. Cette configuration permet, conformément à la figure 5, de replier l'un des jambages 5,6, le jambage gauche 6 sur la figure 5, le long du véhicule de transport automoteur 1 au plus près du châssis 3, afin de réduire au maximum la largeur dudit véhicule de transport automoteur 1 en position repliée.

Pour régler la largeur de voie, le véhicule de transport automoteur 1 comporte un organe de levage rapide (non représenté sur les figues) inspiré des modèles utilisés pour soulever des véhicules de compétition automobile tels que des formules 1. Ainsi, cet organe de levage rapide est articulé au châssis 3 autour d'un axe sensiblement horizontal et comprend un manche et au moins un bras d'appui agencé pour prendre appui sur le sol et soulever l'arrière du véhicule de transport automoteur 1 lorsque que l'on fait pivoter le manche autour de l'axe de rotation dudit organe de levage rapide. Ainsi, lorsque le véhicule de transport automoteur 1 est en appui sur la première roue 4 et le bras d'appui de l'organe de levage rapide, les deuxième et troisième roues 7,8 ne sont plus en contact avec le sol et leur écartement peut alors être facilement réglé. Une fois ledit réglage effectué, il suffit de reposer le véhicule de transport automoteur 1 en appui sur ses première, deuxième et troisième roues 4,7,8.

En référence à la figure 3, la zone médiane 32 du châssis 3 peut recevoir un poste de pilotage et ainsi comporter une assise 38 et un poste de commande 39. Compte tenu de la configuration du châssis 3, on comprend bien que ladite assise 38 est positionnée près des axes de rotation de la première roue 4, donc très près du sol, de sorte que le conducteur puisse intervenir sur les cultures sans avoir à descendre du véhicule de transport automoteur 1.

Toutefois, la zone médiane 32 du châssis 3 peut également servir à supporter des modules tels que, par exemple, une benne basculante, un plateau à hauteur variable ou encore une nacelle de cueillette. Dans cette configuration porte-module, les commandes sont regroupées sur une console déportée (non représentée sur les figures) permettant un pilotage à distance du véhicule de transport automoteur 1, la liaison entre ladite console et le véhicule de transport automoteur 1 étant assurée grâce à une connexion filaire ou grâce à une connexion par onde électromagnétique du type onde radio par exemple. Ainsi, on pourra piloter le véhicule de transport automoteur 1 en marchant à coté dans un entre-rangs adjacent. En outre, la console comporte un organe de fixation, du type aimant par exemple, pour être fixée sur différents endroits du châssis 3 notamment, lorsque le véhicule de transport automoteur 1 est à l'arrêt.

Ainsi, en référence à la figure 5, le véhicule de transport automoteur 1 comporte une benne 11 basculante utilisée notamment pour le transport des sarments et un actionneur 12 permettant le basculement de ladite benne 11 vers l'arrière dudit véhicule de transport automoteur 1. Ledit actionneur 12 est avantageusement un vérin électrique à double effet. Bien sûr, il peut être substitué par tout autre vérin tel qu'un vérin hydraulique ou analogue ou par tout autre moyen d'actionnement procurant des effets similaires.

### Description d'autres modes de réalisation

Dans une variante de réalisation non représentée, le véhicule de transport automoteur est semblable à celui décrit précédemment mais en diffère en ce qu'il comporte un organe de réglage de longueur sur au moins un bras de l'organe de réglage de chacun des jambages droit et gauche. Chaque organe de réglage permet, en augmentant ou en réduisant la longueur du bras associé, de faire pivoter autour d'un axe sensiblement vertical le jambage droit ou gauche associé et donc la deuxième ou troisième roue. Cette variante de réalisation permet, pour un réglage de voie donné, de faire tourner lesdites deuxième et troisième roues et donc de diriger le véhicule de transport automoteur lorsque ce dernier se déplace en marche arrière ou lorsque le poste de pilotage est inversé. Lesdits organes de réglage de longueur sont avantageusement des vérins électriques à double effet. Bien sûr, ils peuvent être substitués par tout autre vérin tel qu'un vérin hydraulique ou analogue ou par tout autre moyen d'actionnement procurant des effets similaires.

Dans une autre variante de réalisation représentée à la figure 6, le véhicule de transport automoteur comporte un organe de réglage 19 comportant également deux bras 191 rectilignes globalement parallèles entre eux et sensiblement horizontaux, chaque bras 191 étant articulé autour d'un axe sensiblement vertical à chacune de ses extrémités libres respectivement à l'extrémité libre d'un jambage droit ou gauche 5,6 et à l'extrémité libre de la poutre 36 associée du châssis 3, les extrémités libres respectives du jambage droit ou gauche 5,6 et de la poutre 36 associés et les bras 91 formant les quatre côtés d'un parallélogramme déformable. Toutefois dans cette variante, les bras 191 sont globalement rectilignes et les extrémités libres respectives du jambage droit ou gauche 5,6 et de la poutre 36 associés sont avantageusement en forme globale de L. Pour ce faire, le jambage droit ou gauche 5,6 et la poutre 36 comporte une aile respectivement 51,61,361 s'étendant perpendiculairement d'un des bords verticaux desdits jambage droit ou gauche 5,6 et la poutre 36. Dans la variante représentée en figure 6, le véhicule de transport automoteur comporte un organe de réglage 19 associé à chacun des jambages droit et gauche 5,6.

### Possibilité d'application industrielle

Le véhicule de transport automoteur 1 selon l'invention s'applique plus particulièrement à la culture en lignes, notamment de la vigne, mais il peut également être utilisé pour d'autres secteurs d'activité tels que les travaux publics par exemple.

Enfin, il va de soi que les exemples de véhicules de transport automoteur 1 conformes à l'invention qui viennent d'être décrits ne sont que des illustrations particulières, en aucun cas limitatives de l'invention.

## Revendications

1. - Véhicule de transport automoteur (1) à au moins trois roues de type enjambeur destiné à travailler dans des cultures en lignes, notamment de la vigne, comprenant un module (2) comportant un châssis (3) muni d'une première roue (4) motrice et directrice et d'au moins un portique arrière (33) composé de deux poutres (36) sensiblement verticales, un jambage droit (5) muni à son extrémité basse d'une deuxième roue (7), un jambage gauche (6) muni à son extrémité basse d'une troisième roue (8), et d'au moins un organe de réglage (9) de largeur de voie assurant la solidarisation d'un des jambages droit ou gauche (5,6) et permettant de régler l'écartement dudit jambage droit ou gauche (5,6) par rapport à l'axe longitudinal dudit module (2), ledit organe de réglage (9) comportant deux bras (91) globalement parallèles entre eux, sensiblement horizontaux et articulés autour d'un axe sensiblement vertical à chacune de ses extrémités libres respectivement à l'extrémité libre du jambage droit ou gauche (5,6) associé et à l'extrémité libre de la poutre (36) associée du châssis (3), lesdites extrémités libres respectives du jambage droit ou gauche (5,6) et de la poutre (36) associés et lesdits bras (91) formant les quatre côtés d'un parallélogramme déformable, ledit véhicule de transport automoteur (1) étant **caractérisé en ce qu'**au moins deux côtés opposés dudit parallélogramme sont en forme globale de L, afin de pouvoir replier ledit jambage droit ou gauche (5,6) le long du véhicule de transport automoteur (1) au plus près du châssis (3) et de réduire ainsi au maximum la largeur dudit véhicule de transport automoteur (1) en position repliée.

2. - Véhicule de transport automoteur (1) selon la revendication 1, **caractérisé en ce qu'il** comporte un organe de réglage (9) de largeur de voie associé à chacun des jambages droit et gauche (5,6).

3. - Véhicule de transport automoteur (1) selon l'une quelconque des revendications 1 ou 2, **caractérisé en ce que** les deux bras (91) sont en forme globale de L et comportent une grande aile (92) et une petite aile (93), lesdites grande et petite ailes (92,93) étant perpendiculaires entre elles et les grandes ailes (92) des bras (91) de chaque organe de réglage (9) étant parallèles entre elles et **en ce que** chaque organe de réglage (9) est tel que ces deux bras (91) soient orientés de manière à ce que, d'une part, la petite aile (93) de l'un desdits bras (91) soit articulée sur le jambage droit ou gauche (5,6) associé et, d'autre part, la petite aile (93) de l'autre bras (91) soit articulée sur le châssis (3).

4. - Véhicule de transport automoteur (1) selon l'une quelconque des revendications 1 ou 2, **caractérisé en ce que** lesdites extrémités libres respectives des jambage droit et/ou gauche (5,6) et poutre (36) sont en forme globale de L.

5. - Véhicule de transport automoteur (1) selon l'une quelconque des revendications 1 à 4, **caractérisé en ce que** au moins l'un des bras (91) de chaque organe de réglage (9) est muni d'un organe de réglage de longueur.

6. - Véhicule de transport automoteur (1) selon l'une quelconque des revendications 1 à 5, **caractérisé en ce que** la première roue (4) est montée pivotante autour d'un axe sensiblement vertical respectivement et est motorisée grâce à des moteurs électriques.

7. - Véhicule de transport automoteur (1) selon la revendication 1 à6, **caractérisé en ce qu'il** comporte un arceau (37) joignant les extrémités libres desdites deux poutres (36) et étant articulé selon un axe sensiblement horizontal permettant d'éviter la déformation du châssis (3) en général et du portique arrière (33) en particulier et d'assurer la sécurité en cas de retournement dudit véhicule de transport automoteur (1).

8. - Véhicule de transport automoteur (1) selon l'une quelconque des revendications 1 à 7, **caractérisé en ce qu'il** comporte un organe de levage rapide articulé au châssis (3) autour d'un axe sensiblement horizontal et comprenant un manche et au moins un bras d'appui agencé pour prendre appui sur le sol et soulever l'arrière du véhicule de transport automoteur (1) lorsque que l'on fait pivoter le manche autour de l'axe de rotation dudit organe de levage rapide.

9. - Véhicule de transport automoteur (1) selon l'une quelconque des revendications 1 à 8, **caractérisé en ce que** le châssis (3) reçoit un poste de pilotage muni d'une assise (38) et d'un poste de commande (39).

10. - Véhicule de transport automoteur (1) selon l'une quelconque des revendications 1 à 9, **caractérisé en ce que** le châssis (3) supporte des modules tels que, par exemple, une benne basculante (11), un plateau à hauteur variable ou encore une nacelle de cueillette.

11. - Véhicule de transport automoteur (1) selon la revendication 10, **caractérisé en ce qu'il** comporte au moins un actionneur (12) permettant la mise en mouvement dudit module.

12. - Véhicule de transport automoteur (1) selon l'une quelconque des revendications 1 à 11, **caractérisé en ce qu'il** comporte une console déportée regroupant l'ensemble des commandes et permettant un pilotage à distance.
